# EUROPÄISCHE PATENTSCHRIFT

(11) **EP 2 496 950 B1**
(45) Veröffentlichungstag und Bekanntmachung des Hinweises auf die Patenterteilung: **11.12.2013**
(21) Anmeldenummer: 10771155.8
(22) Anmeldetag: 29.10.2010
(51) Int. Cl.: G01P 1/02, G01D 11/24, G01D 11/30, F16M 13/02

(54) **SENSORANORDNUNG FÜR EIN FAHRZEUG UND KORRESPONDIERENDES VERFAHREN ZUR HERSTELLUNG EINER SOLCHEN SENSORANORDNUNG**
SENSOR ARRANGEMENT FOR A VEHICLE AND CORRESPONDING METHOD FOR PRODUCING SUCH A SENSOR ARRANGEMENT
DISPOSITIF CAPTEUR POUR UN VÉHICULE ET PROCÉDÉ CORRESPONDANT POUR FABRIQUER UN TEL AGENCEMENT CAPTEUR

(30) Priorität: 04.11.2009 DE 102009046392
(43) Veröffentlichungstag der Anmeldung: 12.09.2012
(73) Patentinhaber: Robert Bosch GmbH, 70442 Stuttgart (DE)
(72) Erfinder: STEINBRINK, Ronald, 99086 Erfurt (DE); MATTHIE, Daniel, 99817 Eisenach (DE); BEYERSDORFER, Jan, 99819 Foertha (DE)
(86) Internationale Anmeldenummer: PCT/EP2010/066521
(87) Internationale Veröffentlichungsnummer: WO 2011/054765

(56) Entgegenhaltungen:
- EP-A2- 1 111 335
- DE-A1-102008 007 317
- DE-A1-102008 042 091
- DE-U1-202008 009 002
- US-A- 5 239 130

## Beschreibung

### Stand der Technik

Die Erfindung geht aus von einer Sensoranordnung für ein Fahrzeug nach der Gattung des unabhängigen Patentanspruchs 1 und von einem korrespondierenden Verfahren zur Herstellung einer solchen Sensoranordnung nach der Gattung des unabhängigen Patentanspruchs 7.

In der Offenlegungsschrift DE 10 2008 042 091 A1 wird ein Verfahren zur Herstellung eines Magnetfeldsensors und ein korrespondierender Magnetfeldsensor, insbesondere zur Verwendung als Drehzahl- und/oder Drehrichtungssensor für die Raddrehung oder für den Triebstrang eines Kraftfahrzeugs beschrieben. Der beschriebene Magnetfeldsensor umfasst eine elektrische Baugruppe zur Erfassung und Auswertung von Magnetfeldsignalen und ein Anschlusskabel, welche gemeinsam in einem Spritzgießprozess mit Kunststoff umhüllt werden. Gleichzeitig wird eine Befestigungslasche angespritzt, die einen Grundkörper mit einer Befestigungsbuchse aufweist. Das beschriebene Herstellungsverfahren verwendet für die Herstellung von Sensoren mit axialem Kabelabgang bewährte Fertigungsverfahren und Fertigungseinrichtungen zur Herstellung von Sensoren mit abgewinkeltem Kabelabgang, die nur mit einer Montagestation kombiniert werden müssen, in welcher dann ebenfalls vollautomatisch das Anschlusskabel gebogen und in der abgewinkelten Position durch geeignete Mittel arretiert wird. Zur Arretierung ist zweckmäßiger Weise ein als Rast- und/oder Nietkontur ausgebildetes Positioniermittel vorgesehen. Die Rast- und/oder Nietkontur kann an das Anschlusskabel angespritzt und nach dem Biegen des Kabels in seine vorbestimmte Winkelstellung mit einem ebenfalls als Rast- und/oder Nietkontur an der Befestigungslasche ausgebildeten Positioniermittel verrastet oder vernietet werden.

Zum Biegen des Kabels in die vorbestimmte Winkelstellung muss das Kabel nicht mehr aus dem Werkstückträger entnommen werden, da die Art der Verbindung eine sofortige Arretierung ermöglicht. Dadurch verringern sich die Prozesszeiten. Unabhängig von der gewünschten Winkelstellung (radial oder axial) des Kabels relativ zum Sensor erlaubt dieses Konzept den Rückgriff auf nur eine einzige Fertigungslinie. Allerdings ist es zur Darstellung von verschiedenen Stellungen der Befestigungslasche und von Funktionslängen erforderlich, Änderungen an den Spritzgießwerkzeugen der Drehzahlfühler durchzuführen. So können beispielsweise neue Werkzeugeinsätze und/oder ein Verstellen von Werkzeugeinsätzen erforderlich sein, wodurch die Werkzeuge sehr komplex und wartungsaufwändig werden.

Bei einer zweckmäßigen Ausgestaltung des beschriebenen Verfahrens werden die Positioniermittel bei der Spritzgießumhüllung des Sensors teilweise direkt an die Befestigungslasche und an das Anschlusskabel angespritzt und teilweise lose nachträglich auf das gebogene Kabel aufgebracht. Des Weiteren kann eine Kappe vorgesehen werden, welche das nahe der Befestigungslasche abgebogene Anschlusskabel in dieser Position arretiert. Hierzu weist die Kappe eine der Biegung des Kabels entsprechende Aussparung auf, mit der sie den gebogenen Teil des Kabels umgreift. Zusätzlich sind in der Aussparung Führungsnuten ausgebildet, welche zusammen mit den Führungsrippen auf der hülsenartigen Kontur des Kabels eine verdrehsichere Positionierung des Kabels gegenüber der Kappe gewährleisten sollen. Um ein Lösen der verschiedenen Positionierungs- und Arretierungsmittel mit auszuschließen ist zusätzlich vorgesehen, dass die jeweils korrespondierenden Teile nach dem Fügen durch Laserschweißen oder Kleben zusätzlich gesichert werden.

In der Gebrauchsmusterschrift DE 20 2008 009 002 U1 wird beispielsweise ein Magnetfeldsensor, insbesondere ein Drehzahl- und/oder Drehrichtungssensor für die Raddrehung oder für den Triebstrang eines Kraftfahrzeugs, mit einer elektrischen Baugruppe beschrieben. Der beschriebene Magnetfeldsensor umfasst ein Sensorelement und ein Anschlusskabel, welche zur Bildung eines Sensorgehäuses durch Spritzgießen zumindest teilweise mit Kunststoff umhüllt sind. Hierbei ist das Sensorgehäuse mit einer Befestigungslasche verbunden, die einen Grundkörper mit Befestigungsmitteln umfasst. Zudem umfasst die Befestigungslasche eine mit dem Grundkörper verbundene Einsteckhülse, in welche ein Sensorgehäusekörper des Sensorgehäuses eingesteckt ist, wobei das Sensorgehäuse und die Einsteckhülse jeweils Fixiermittel umfassen, die so ausgebildet sind, dass verschiedene Winkelstellungen zur Fixierung des Sensorgehäuses und der Befestigungslasche vorhanden sind. Das Sensorgehäuse und die Befestigungslasche sind in einer der verschiedenen Winkelstellungen zueinander fixiert.

### Offenbarung der Erfindung

Die erfindungsgemäße Sensoranordnung für ein Fahrzeug mit den Merkmalen des unabhängigen Anspruchs 1 und ein entsprechendes Verfahren zur Herstellung eines solchen Sensors mit den Merkmalen des unabhängigen Anspruchs 4 haben den Vorteil, dass ein Sensorelement und ein Anschlusskabel zur Bildung eines Sensorgehäuses durch Spritzgießen zumindest teilweise mit Kunststoff umhüllt werden und das Sensorgehäuse anschließend mit einer Befestigungslasche verbunden wird, die einen Grundkörper mit Befestigungsmitteln umfasst. Die Befestigungslasche kann in einem getrennten Arbeitsgang beispielsweise ebenfalls als Kunststoffspritzteil hergestellt werden. Die Befestigungslasche umfasst eine mit dem Grundkörper verbundene Einsteckhülse, in welche ein Sensorgehäusekörper des Sensorgehäuses eingesteckt ist, wobei das Sensorgehäuse und die Einsteckhülse jeweils Fixiermittel umfassen, die so ausgebildet sind, dass verschiedene Winkelstellungen zur Fixierung des Sensorgehäuses und der Befestigungslasche vorhanden sind, wobei das Sensorgehäuse und die Befestigungslasche in einer der verschiedenen Winkelstellungen zueinander fixiert sind. Durch die verschiedenen Winkelstellungen ist es möglich, die optimale Winkelstellung der Befestigungslasche zum Sensorgehäuse im Hinblick auf die Einbausituation im Fahrzeug zu wählen. Dadurch kann die Bauform der Sensoranordnung optimal an den Einbauraum im Fahrzeug angepasst werden. Die Herstellung der erfindungsgemäßen Sensoranordnung erfolgt im Wesentlichen durch die Montage des Sensorgehäuses in der Befestigungslasche.

Erfindungsgemäß sind am Anschlusskabel und an der Befestigungslasche als Rastkonturen ausgeführte Positioniermittel zum Arretieren des in eine Winkeistellung zu dem Sensorelement und/oder der Befestigungslasche gebogenen Anschlusskabels angeordnet. Zur Arretierung ist eine erste Rastkontur als hülsenförmige Kontur am Anschlusskabel angeordnet, und mindestens eine zweite Rastkontur ist als Aussparung mit angeformten Rastvorsprüngen als Teil der Befestigungslasche ausgeführt. Die Rastkontur baut relativ klein, so dass sich der Materialaufwand gegenüber dem Stand der Technik verringert. Zum Biegen des Kabels in die vorbestimmte Winkelstellung muss das Kabel nach dem Verstemmvorgang nicht mehr aus dem Werkstückträger entnommen werden, da die Art der Verbindung eine sofortige Arretierung ermöglicht. Dadurch verringern sich die Prozesszeiten. Sind mehrere zweite Rastkonturen an der Befestigungslasche angeordnet, dann kann das Anschlusskabel in verschiedene Richtungen radial umgebogen werden, von denen in Abhängigkeit vom Einbauraum im Fahrzeug eine bevorzugte Biegerichtung ausgewählt wird, um eine optimale Führung des Anschlusskabels im Fahrzeug zu ermöglichen. Nach der Arretierung der Positionierungselemente nehmen die an die Befestigungslasche angeformten Positionierungsmittel die vom Anschlusskabel kommenden axialen Zugkräfte auf.

Des Weiteren ist eine Kappe mit mindestens einer Aussparung für das Anschlusskabel vorgesehen. Hierbei deckt die Kappe den Abwinkelbereich des Anschlusskabels ab und ist auf die Befestigungslasche aufgeschoben und verrastet. Die Kappe wird zur Fixierung aller Teile auf die Befestigungslasche geschoben und verrastet. Hierbei werden in der Kappe die vom Anschlusskabel kommenden radialen Kräfte nicht von der Verrastung aufgenommen, sondern von einer umgreifenden Geometrie. Die Kappe dient in vorteilhafter Weise als Befestigungselement und als Hitzeschutz für die Biegestelle des Anschlusskabels.

Vorzugsweise werden die Positioniermittel für das Anschlusskabel zumindest teilweise direkt an das Anschlusskabel und/oder an die Sensoreinheit und/oder an die Befestigungslasche angespritzt, so dass lose Positionier- und Befestigungsmittel zumindest weitgehend entfallen können. Insbesondere werden die Positioniermittel an das Anschlusskabel und an die Befestigungslasche der Sensoranordnung angespritzt. Das Sensorelement bzw. eine elektronische Baugruppe erfasst ein zu überwachendes Magnetfeld und wertet die Sensorsignale aus. Demzufolge werden die Ausrichtung des Sensorelements und der Befestigungslasche sowie die Führung des Anschlusskabels bestimmt.

Ausführungsformen der Erfindung ermöglichen in vorteilhafter Weise die Herstellung von Sensoranordnungen, deren Befestigungslaschen und Sensorgehäuse verschiedene Winkelstellungen zu einander aufweisen können, ohne dass Ände-rungen an den Spritzgießwerkzeugen erforderlich sind. Die Herstellung der verschiedenen Sensoranordnungen erfolgt durch die Montage, wobei die Flexibilität der Winkelstellung der Befestigungslasche zum Sensorgehäuse beispielsweise durch mehrere Rastmöglichkeiten dargestellt wird.

Durch die in den abhängigen Ansprüchen aufgeführten Maßnahmen und Weiterbildungen sind vorteilhafte Verbesserungen der im unabhängigen Patentanspruch 1 angegebenen Sensoranordnung für ein Fahrzeug und des im unabhängigen Patentanspruch 4 angegebenen Verfahrens zur Herstellung einer solchen Sensoranordnung möglich.

Besonders vorteilhaft ist, dass am Sensorgehäusekörper als Fixiermittel eine Sternkontur angeformt ist, die mit einer korrespondierenden an der Einsteckhülse angeordneten Sternkontur zusammenwirkt. Somit wird der Sensorgehäusekörper in die Einsteckhülse der Befestigungslasche eingesteckt und die Winkelstellung der Befestigungslasche zum Sensorgehäuse wird in vorteilhafter Weise über die eingebrachte Sternkontur an beiden Teilen fixiert.

In Ausgestaltung der erfindungsgemäßen Sensoranordnung ist die Sternkontur des Sensorgehäusekörpers mit der korrespondierenden Sternkontur der Einsteckhülse heiß verstemmt. Durch die Heißverstemmung kann in vorteilhafter Weise ein gewünschtes Funktionsmaß und eine dauerhafte Verbindung zwischen den Komponenten sichergestellt werden.

Ausführungsbeispiele der Erfindung sind in den Zeichnungen dargestellt und werden in der nachfolgenden Beschreibung näher erläutert.

### Kurze Beschreibung der Zeichnungen

Es zeigen:
Figur 1 eine perspektivische Darstellung eines ersten Ausführungsbeispiels einer erfindungsgemäßen Sensoranordnung.
Figur 2 eine perspektivische Darstellung eines ersten Ausführungsbeispiels einer Befestigungslasche für die erfindungsgemäße Sensoranordnung aus Figur 1.
Figur 3 eine perspektivische Darstellung eines Sensorgehäuses mit Fixiermitteln und einem Anschlusskabel, an welches erste Positioniermittel gemäß einem ersten Ausführungsbeispiel angespritzt sind, für die erfindungsgemäße Sensoranordnung aus Figur 1.
Figur 4 eine perspektivische Darstellung des in Figur 3 dargestellten Sensorgehäuses, das mit der Befestigungslasche aus Figur 2 verbunden ist, vor dem Biegen des Kabelabgangs in eine abgewinkelte Position.
Figur 5 eine perspektivische Darstellung der Anordnung aus Figur 4 mit rechtwinklig abgebogenem Anschlusskabel vor dem Aufstecken einer losen Kappe.
Figur 6 eine perspektivische Darstellung eines ersten Ausführungsbeispiels einer Kappe für die erfindungsgemäße Sensoranordnung aus Figur 1.
Figur 7 eine perspektivische Darstellung eines zweiten Ausführungsbeispiels einer erfindungsgemäßen Sensoranordnung.
Figur 8 eine perspektivische Darstellung des zweiten Ausführungsbeispiels der erfindungsgemäßen Sensoranordnung aus Figur 7 ohne aufgeschobene Kappe.
Figur 9 eine perspektivische Darstellung eines zweiten Ausführungsbeispiels einer Kappe für die erfindungsgemäße Sensoranordnung aus Figur 7.
Figur 10 eine perspektivische Darstellung des in Figur 7 dargestellten erfindungsgemäßen Sensoranordnung mit der angesetzten aber noch nicht vollständig aufgeschobenen Kappe.

### Ausführungsformen der Erfindung

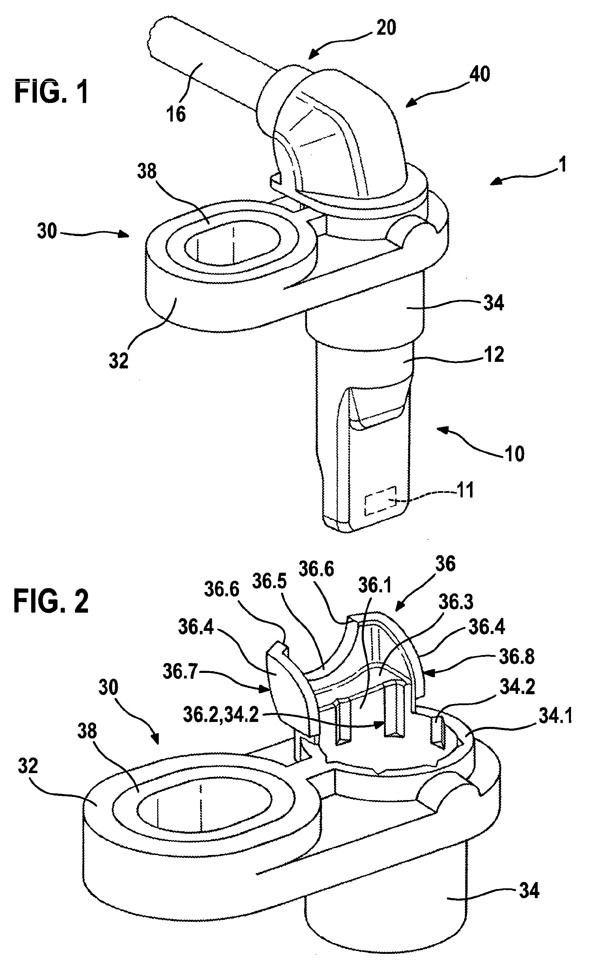

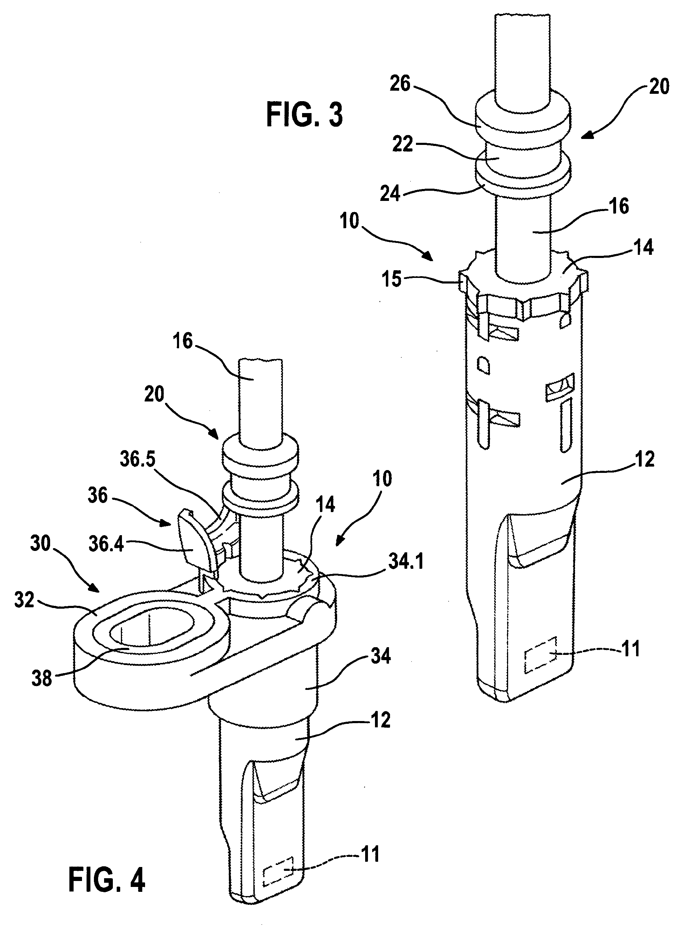

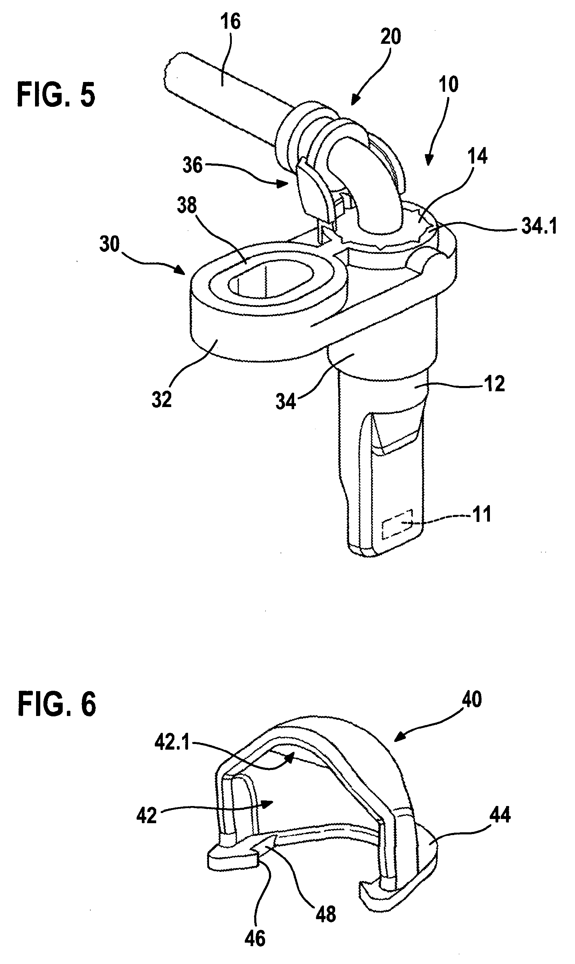

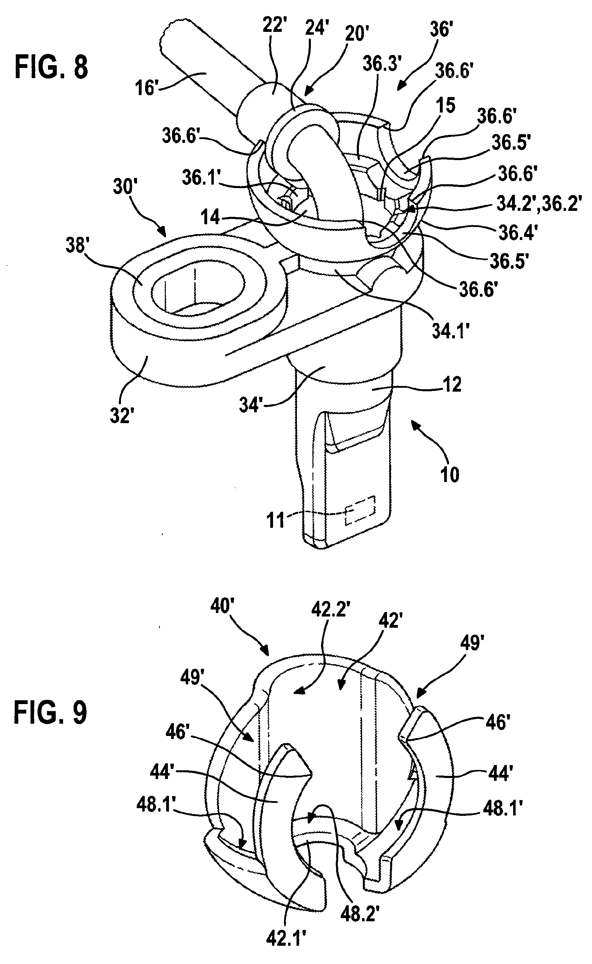

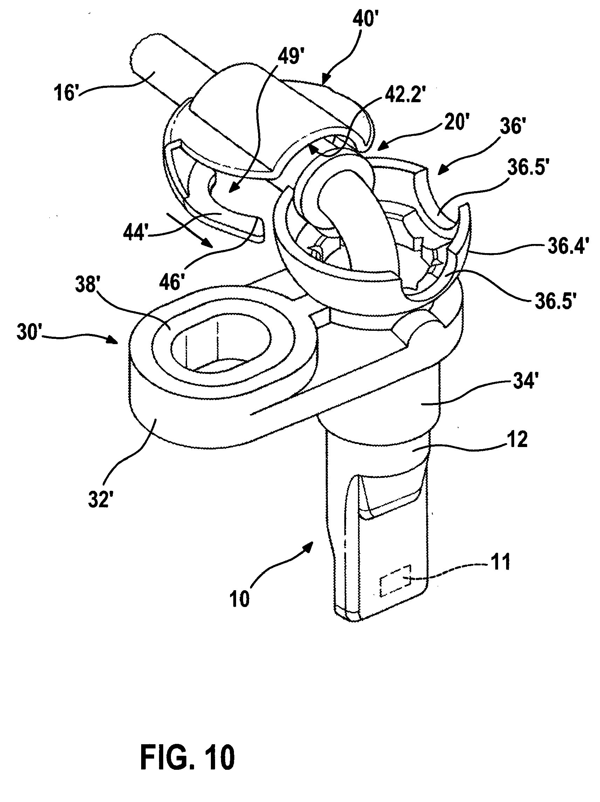

In den begleitenden Fig. 1 bis 10 bezeichnen gleiche Bezugszeichen durchgehend Elemente bzw. Komponenten, welche gleiche bzw. analoge Funktionen ausführen.

In Fig. 1 ist ein erstes Ausführungsbeispiel einer Sensoranordnung 1 mit einem Sensorelement 11 bzw. einer elektrischen Baugruppe zur Erfassung und Auswertung von Messsignalen, insbesondere von Magnetfeldsignalen, einer Befestigungslasche 30, einem Anschlusskabel 16 und einer Kappe 40 dargestellt. Das Sensorelement 11 und das Anschlusskabel 16 wurden zur Bildung eines Sensorgehäuses 10 durch Spritzgießen zumindest teilweise mit Kunststoff umhüllt. Das Sensorgehäuse 10 ist mit der Befestigungslasche 30 verbunden, die einen Grundkörper 32 mit einer seitlich des Kabelabgangs angeordneten Befestigungsbuchse 38 umfasst. Zudem umfasst die Befestigungslasche 30 eine mit dem Grundkörper 32 verbundene Einsteckhülse 34, in welche ein Sensorgehäusekörper 12 des Sensorgehäuses 10 eingesteckt ist. Das Sensorgehäuse 10 und die Einsteckhülse 34 umfassen jeweils Fixiermittel 14, 15, 34.1, 34.2, die nachfolgend unter Bezugnahme auf Fig. 2 bis 5 im Detail beschrieben werden. Die Fixiermittel 14, 15, 34.1, 34.2 sind so ausgebildet, dass verschiedene Winkelstellungen zur Fixierung des Sensorgehäuses 10 und der Befestigungslasche 30 vorhanden sind, wobei das Sensorgehäuse 10 und die Befestigungslasche 30 in einer der verschiedenen Winkelstellungen zueinander fixiert sind.

Wie aus Fig. 1 bis 6 ersichtlich ist, ist auf das Anschlusskabel 16 nahe der Befestigungslasche 30 eine hülsenartige Kontur 22 als erste Positionierungsmittel 20 aufgespritzt, die mit korrespondierenden an der Befestigungslasche 30 angeordneten Positionierungsmitteln 36 zusammenwirken, um eine Winkelstellung des gebogenen Anschlusskabels 16 zum Sensorelement 11 und/oder zur Befestigungslasche 30 zu arretieren. Die Positionierungsmittel 20, 36 werden nachfolgend unter Bezugnahme auf Fig. 2 bis 5 im Detail beschrieben. Als Kunststoff für die einheitliche Spritzgießummantelung im Bereich des Sensorelements 11 bzw. der elektrischen Baugruppe und des Anschlusskabels 16 sowie zur Herstellung der Befestigungslasche 30 und zur Einbettung der Befestigungsbuchse 38 eignet sich insbesondere ein Polyamidwerkstoff.

Wie aus Fig. 1 bis 6 ersichtlich ist, ist in die Befestigungslasche 30 eine Befestigungsbuchse 38 eingebettet, durch die beispielsweise eine Schraube zur Befestigung der Sensoranordnung 1 geführt werden kann, um die Sensoranordnung 1 am Einbauort im Fahrzeug zu befestigen. Zudem umfasst die Befestigungslasche 30 eine Einsteckhülse 34, welche im dargestellten Ausführungsbeispiel während des Spritzvorgangs an den Grundkörper 32 angeformt wird. Zur Fixierung des Sensorgehäuses 10 und der Befestigungslasche 30 ist an einem oberen Ende 34.1 der Einsteckhülse 34 eine Sternkontur 34.2 eingebracht, die mit einer weiteren Sternkontur 15 zusammenwirkt, die an einem oberen Ende 14 des Sensorgehäusekörpers 12 angeordnet ist. Im dargestellten Ausführungsbeispiel ist die am oberen Ende 14 des Sensorgehäusekörpers 12 angeordnete Sternkontur 15 als positive Sternkontur mit entsprechenden Vorsprüngen und die am oberen Ende 34.1 der Einsteckhülse 34 angeordnete Sternkontur 36.2 als negative Sternkontur mit entsprechenden Aussparungen zur Aufnahme der Vorsprünge der positiven Sternkontur 15 ausgeführt. Entsprechend der Anzahl von Vorsprüngen und korrespondierenden Aussparungen sind verschiedene Winkelstellungen vorhanden, in denen das Sensorgehäuse 10 bzw. der Sensorgehäusekörper in die Einsteckhülse 34 eingesteckt werden kann. Zur Verbesserung der Fixierung zwischen dem Sensorgehäusekörper 12 und der Einsteckhülse 34 kann die Sternkontur 15 des Sensorgehäusekörpers 12 mit der korrespondierenden Sternkontur 34.2 der Einsteckhülse 34 in der gewünschten Winkelstellung heiß verstemmt werden.

Wie aus Fig. 1 bis 6 weiter ersichtlich ist, sind an der Befestigungslasche 30 zweite Positionierungsmittel 36 in Form eines Winkelelements angeformt, das mit den als hülsenartige Kontur 22 ausgeführten am Anschlusskabel 16 angespritzten ersten Positionierungsmitteln 20 zusammenwirken, um eine Winkelstellung des gebogenen Anschlusskabels 16 zum Sensorelement 11 und/oder zur Befestigungslasche 30 zu arretieren. Wie aus Fig. 2 weiter ersichtlich ist, umfassen die als Winkelelement ausgeführten zweiten Positionierungsmittel 36 einen ersten Schenkel 36.1 und einen zweiten Schenkel 36.3, die eine vorgegebene Winkelstellung zueinander aufweisen. Im dargestellten Ausführungsbeispiel stehen die beiden Schenkel 36.1, 36.3 im Wesentlichen senkrecht zueinander. Der erste Schenkel 36.1 ist als teilweise Verlängerung der Einsteckhülse 34 ausgeführt und weist ebenfalls eine Sternkontur 36.2 auf, um das Einführen des Sensorgehäusekörpers 12 in die Einsteckhülse 34 zu ermöglichen. Der zweite Schenkel 36.3 weist eine nicht näher bezeichnete Vertiefung auf, welche auf einen Ringbund 24 abgestimmt ist, der an einer Seite der hülsenförmigen Kontur 22 angeformt ist. Am anderen Ende der hülsenförmigen Kontur 22 ist ein weiterer Ringbund 26 angeformt. Am Ende des zweiten Schenkels 36.3 ist eine Rastkontur mit einer Aussparung 36.5 angeordnet, an deren Enden jeweils ein Rastvorsprung 36.6 angeformt ist. Die Aussparung 36.5 und die Rastvorsprünge 36.6 und die an das Anschlusskabel 16 angespritzten ersten Positionierungsmittel 20 sind ebenfalls auf einander abgestimmt, so dass die Rastvorsprünge 36.6 nach dem Biegen des Anschlusskabels 16 mit der hülsenförmigen Kontur 22 verrasten, um das gebogene Anschlusskabel 16 in der vorgegebenen Winkelstellung zu arretieren. Die beiden an die hülsenförmige Kontur 22 angeformten Ringbunde 24, 26 begrenzen das axiale Spiel des Anschlusskabels 16 und nehmen in vorteilhafter Weise die axialen Zugkräfte auf.

Zur Fixierung aller Teile wird die Kappe 40 über das obere Ende 34.1 der Einsteckhülse 34 und die zwei Seitenflächen 36.4 der als Winkelelement ausgeführten zweiten Positionierungsmittel 36 geschoben. Hierzu weist die Kappe 40 eine der Biegung des Anschlusskabels 16 entsprechende Aussparung 42 auf, deren obere Öffnung 42.1 an die Kontur des Ringbunds 24 angepasst ist und einen nicht näher bezeichneten Anschlag für den Ringbund 24 aufweist. Der untere Rand der Aussparung 42 ist als Verstärkungsbügel 44 ausgeführt, mit dem die Kappe 40 auf dem Rand der Einsteckhülse 34 aufliegt. An jedem Ende des Verstärkungsbügels 44 der Kappe 40 ist jeweils eine Anlagefläche 48 und ein Rastvorsprung 46 angeformt, welche mit entsprechend ausgeführten Rastkanten 36.7 an den Seitenflächen 36.4 der als Winkelelement ausgeführten zweiten Positionierungsmittel 36 verrasten. Nach dem Verrasten liegen die Anlageflächen 48 der Kappe 40 an den Seitenflächen 36.4 der als Winkelelement ausgeführten zweiten Positionierungsmittel 36 an. Das bedeutet, dass in der Kappe 40 die vom Anschlusskabel 16 kommenden radialen Kräfte nicht von der Verrastung aufgenommen werden, sondern von der umgreifenden Geometrie in Form der Anlageflächen 48 und der Seitenflächen 36.4. Die Kappe 40 dient somit als Befestigungselement und als Hitzeschutz für die Biegestelle des Anschlusskabels 16. Die Gestaltungen der ersten und zweiten Positionierungsmittel 20, 36 sowie der Aussparung 42 in der Kappe 40 sind im dargestellten Ausführungsbeispiel so gewählt, dass eine rechtwinklige Umlenkung des Anschlusskabels 16 gegenüber dem Sensorgehäusekörper 12 erfolgt. Bei Bedarf können auch beliebige andere Umlenkwinkel für das Anschlusskabel 16 durch entsprechende Gestaltungen der ersten und zweiten Positionierungsmittel 20, 36 sowie der Aussparung 42 in der Kappe 40 realisiert werden.

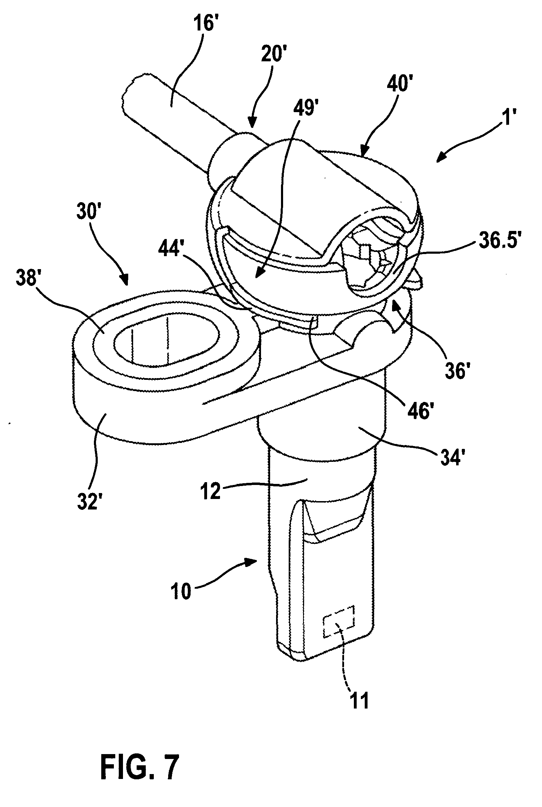

In Fig. 7 ist ein zweites Ausführungsbeispiel einer Sensoranordnung 1' mit einem Sensorelement 11 bzw. einer elektrischen Baugruppe zur Erfassung und Auswertung von Messsignalen, insbesondere von Magnetfeldsignalen, einer Befestigungslasche 30', einem Anschlusskabel 16' und einer Kappe 40' dargestellt. Das Sensorelement 11 und das Anschlusskabel 16' wurden zur Bildung eines Sensorgehäuses 10 durch Spritzgießen zumindest teilweise mit Kunststoff umhüllt. Das Sensorgehäuse 10 entspricht im Wesentlichen der unter Bezugnahme auf Fig. 1 bis 6 beschriebenen ersten Ausführungsform der Erfindung.

Wie aus Fig. 7 bis 10 ersichtlich ist, ist das Sensorgehäuse 10 mit einer Befestigungslasche 30' verbunden, die einen Grundkörper 32' mit einer seitlich des Kabelabgangs angeordneten Befestigungsbuchse 38' umfasst. Analog zum ersten Ausführungsbeispiel umfasst die Befestigungslasche 30' eine mit dem Grundkörper 32' verbundene Einsteckhülse 34', in welche der Sensorgehäusekörper 12 des Sensorgehäuses 10 eingesteckt ist. Das Sensorgehäuse 10 und die Einsteckhülse 34' umfassen analog zum ersten Ausführungsbeispiel jeweils Fixiermittel 14, 15, 34.1', 34.2', die so ausgebildet sind, dass verschiedene Winkelstellungen zur Fixierung des Sensorgehäuses 10 und der Befestigungslasche 30' vorhanden sind, wobei das Sensorgehäuse 10 und die Befestigungslasche 30' in einer der verschiedenen Winkelstellungen zueinander fixiert sind. Analog zum ersten Ausführungsbeispiel ist in die Befestigungslasche 30' eine Befestigungsbuchse 38' eingebettet, durch die beispielsweise eine Schraube zur Befestigung der Sensoranordnung 1' geführt werden kann, um die Sensoranordnung 1' am Einbauort im Fahrzeug zu befestigen. Zudem umfasst die Befestigungslasche 30' eine Einsteckhülse 34', welche im dargestellten Ausführungsbeispiel während des Spritzvorgangs an den Grundkörper 32' angeformt wird. Zur Fixierung des Sensorgehäuses 10 und der Befestigungslasche 30' ist am oberen Ende 34.1' der Einsteckhülse 34' eine Sternkontur 34.2' eingebracht, die mit einer weiteren Sternkontur 15 zusammenwirkt, die am oberen Ende 14 des Sensorgehäusekörpers 12 angeordnet ist. Analog zum ersten Ausführungsbeispiel ist die am oberen Ende 14 des Sensorgehäusekörpers 12 angeordnete Sternkontur 15 als positive Sternkontur und die am oberen Ende 34.1' der Einsteckhülse 34' angeordnete Sternkontur 36.2' als negative Sternkontur 15 ausgeführt. Entsprechend der Anzahl von Vorsprüngen und korrespondierenden Aussparungen sind verschiedene Winkelstellungen vorhanden, in denen das Sensorgehäuse 10 bzw. der Sensorgehäusekörper 12 in die Einsteckhülse 34' eingesteckt werden kann. Zur Verbesserung der Fixierung zwischen dem Sensorgehäusekörper 12 und der Einsteckhülse 34' können die beiden Sternkonturen 15, 34.2 auch beim zweiten Ausführungsbeispiel heiß verstemmt werden.

Wie aus Fig. 7 bis 10 weiter ersichtlich ist, ist auf das Anschlusskabel 16' nahe der Befestigungslasche 30' eine hülsenartige Kontur 22' mit einem Ringbund 24' als erste Positionierungsmittel 20' aufgespritzt, die mit korrespondierenden an der Befestigungslasche 30' angeordneten Positionierungsmitteln 36' zusammenwirken, um eine Winkelstellung des gebogenen Anschlusskabels 16' zum Sensorelement 11 und/oder zur Befestigungslasche 30' zu arretieren. Im Unterschied zum ersten Ausführungsbeispiel sind an der Befestigungslasche 30' zweite Positionierungsmittel 36' in Form einer Kugelschale angeformt, welche mit den als hülsenartige Kontur 22' ausgeführten am Anschlusskabel 16' angespritzten ersten Positionierungsmitteln 20 zusammenwirken, um eine Arretierung des gebogenen Anschlusskabels 16' in drei verschiedene Winkelstellungen zu ermöglichen.

Wie aus Fig. 7 bis 10 weiter ersichtlich ist, umfassen die als Kugelschale ausgeführten zweiten Positionierungsmittel 36' eine Innenwand 36.1' mit einem Absatz 36.3' und eine Außenwand 36.4'. Ein nicht näher bezeichneter unterer Bereich der Innenwand 36.1' und der Absatz 36.3' weisen eine vorgegebene Winkelstellung zueinander auf. Im dargestellten Ausführungsbeispiel steht der Absatz 36.3' im Wesentlichen senkrecht zur Innenwand 36.1'. Der untere Bereich der Innenwand 36.1' ist als Verlängerung der Einsteckhülse 34' ausgeführt und weist ebenfalls eine Sternkontur 36.2' auf, um das Einführen des Sensorgehäusekörpers 12 in die Einsteckhülse 34' zu ermöglichen. Der Absatz 36.3' weist mehrere nicht näher bezeichnete Vertiefungen auf, welche auf den Ringbund 24 der hülsenförmigen Kontur 22 abgestimmt sind. In den als Kugelschale ausgeführten zweiten Positionierungsmittel 36' sind drei Rastkonturen mit jeweils einer Aussparung 36.5' angeordnet, an deren Enden jeweils Rastvorsprünge 36.6' angeformt sind. Die Aussparungen 36.5' und die Rastvorsprünge 36.6' und die an das Anschlusskabel 16' angespritzten ersten Positionierungsmittel 20' sind so auf einander abgestimmt, dass die Rastvorsprünge 36.6' nach dem Biegen des Anschlusskabels 16' mit der hülsenförmigen Kontur 22' verrasten, um das gebogene Anschlusskabel 16' in der gewählten Winkelstellung zu arretieren. Der an die hülsenförmige Kontur 22' angeformten Ringbunde 24' begrenzt das axiale Spiel des Anschlusskabels 16' und nimmt in vorteilhafter Weise die axialen Zugkräfte auf.

Zur Fixierung aller Teile wird die Kappe 40' auf die als Kugelschale ausgeführten zweiten Positionierungsmittel 36' geschoben und verrastet. Hierzu weist die Kappe 40' eine der Biegung des Anschlusskabels 16' entsprechende Aussparung 40 mit zwei Hauptöffnungen 42.1', 42.2' auf. Eine erste Hauptöffnung 42.1 ist an die Außenkontur der hülsenförmigen Kontur 22 angepasst und weist eine Anlagefläche 48.2 für den Ringbund 24' der hülsenförmigen Kontur 22' auf. Eine zweite Hauptöffnung 42.2' weist eine größere lichte Weite als die erste Hauptöffnung 42.1' auf und ist an die Kontur des Ringbunds 24' so angepasst, dass die zweite Hauptöffnung 42.2' über den Ringbund 24' geschoben werden kann, deren oberer Rand an die Kontur des Ringbunds 24 angepasst ist. Der untere Rand der Aussparung 42' wird durch zwei Klemmbügel 44' gebildet, die zwei weitere Aussparungen 49' nach unten begrenzen, welche an die Kontur der Außenwand 36.4' der als Kugelschale ausgeführten zweiten Positionierungsmittel 36' so angepasst sind, dass im verrasteten Zustand der Kappe 40' zwei die Aussparungen 49' begrenzende Anlageflächen 48.1' an der Außenwand 36.4' der als Kugelschale ausgeführten zweiten Positionierungsmittel 36' anliegen. Im verrasteten Zustand der Kappe 40' umgreifen die beiden an den Klemmbügeln 44' angeformten Rastvorsprünge 46' die Kontur der als Kugelschale ausgeführten zweiten Positionierungsmittel 36'. Das bedeutet, dass in der Kappe 40' die vom Anschlusskabel 16 kommenden radialen Kräfte nicht von der Verrastung aufgenommen werden, sondern von der umgreifenden Geometrie in Form der Anlageflächen 48.1' und der Außenwand 36.4' der als Kugelschale ausgeführten zweiten Positionierungsmittel 36'. Die Kappe 40' dient somit ebenfalls als Befestigungselement und als Hitzeschutz für die Biegestelle des Anschlusskabels 16'. Die Gestaltungen der ersten und zweiten Positionierungsmittel 20', 36' sowie der Aussparung 42' in der Kappe 40' sind im dargestellten Ausführungsbeispiel so gewählt, dass eine rechtwinklige Umlenkung des Anschlusskabels 16 an drei verschiedenen Winkelstellungen gegenüber dem Sensorgehäusekörper 12 möglich ist. Bei Bedarf können auch beliebige andere Umlenkwinkel für das Anschlusskabel 16' und mehr als drei Winkelstellungen durch entsprechende Gestaltungen der ersten und zweiten Positionierungsmittel 20', 36' sowie der Aussparung 42' in der Kappe 40' realisiert werden.

Die Arbeitsweise der Sensoranordnung 1, 1' ist grundsätzlich bekannt und die Anwendungsmöglichkeiten sind sehr vielseitig. In Kraftfahrzeugen dient die Sensoranordnung 1 insbesondere zur Bestimmung der Drehgeschwindigkeit, der Beschleunigung, des Beschleunigungsgradienten und/oder des Verdrehwinkels von rotierenden Teilen. Die Verwendung in Kraftfahrzeugen wird dabei durch die verschiedenen Winkelstellungen begünstigt, die es ermöglichen die optimale Winkelstellung der Befestigungslasche zum Sensorgehäuse im Hinblick auf die Einbausituation im Fahrzeug zu wählen. Dadurch kann die Bauform der Sensoranordnung optimal an den Einbauraum im Fahrzeug angepasst werden. Die Herstellung der erfindungsgemäßen Sensoranordnung erfolgt im Wesentlichen durch die Montage des Sensorgehäuses in der Befestigungslasche.

Ausführungsformen der Erfindung ermöglichen in vorteilhafter Weise die Herstellung von Sensoranordnungen, deren Befestigungslaschen und Sensorgehäuse verschiedene Winkelstellungen zu einander aufweisen können, ohne dass eine Änderungen an den Spritzgießwerkzeugen erforderlich ist. Die Herstellung der verschiedenen Sensoranordnungen erfolgt durch die Montage, wobei die Flexibilität der Winkelstellung der Befestigungslasche zum Sensorgehäuse beispielsweise durch mehrere Rastmöglichkeiten dargestellt wird.

## Patentansprüche

1. Sensoranordnung für ein Fahrzeug, insbesondere zum Ermitteln einer Drehzahl und/oder Drehrichtung, mit einem Sensorelement (11), einem Anschlusskabel (16,16') und einer Befestigungslasche (30, 30'), wobei das Sensorelement (11) und das Anschlusskabel (16, 16') zur Bildung eines Sensorgehäuses (10) durch Spritzgießen zumindest teilweise mit Kunststoff umhüllt sind, wobei das Sensorgehäuse (10) mit der Befestigungslasche (30, 30') verbunden ist, die einen Grundkörper (32, 32') mit Befestigungsmitteln (38, 38') umfasst, wobei die Befestigungslasche (30, 30') eine mit dem Grundkörper (32, 32') verbundene Einsteckhülse (34, 34') umfasst, in welche ein Sensorgehäusekörper (12) des Sensorgehäuses (10) eingesteckt ist, wobei das Sensorgehäuse (10) und die Einsteckhülse (34, 34') jeweils Fixiermittel (14, 15, 34.1, 34.1', 34.2, 34.2') umfassen, die so ausgebildet sind, dass verschiedene Winkelstellungen zur Fixierung des Sensorgehäuses (10) und der Befestigungslasche (30, 30') vorhanden sind, wobei das Sensorgehäuse (10) und die Befestigungslasche (30, 30') in einer der verschiedenen Winkelstellungen zueinander fixiert sind, **dadurch gekennzeichnet, dass** am Anschlusskabel (16, 16') und an der Befestigungslasche (30, 30') als Rastkonturen (22, 36.5, 36.5', 36.6, 36.6') ausgeführte Positionierungsmittel (20, 20', 36, 36') angeordnet sind, welche das in eine Winkelstellung zum Sensorelement (11) und/oder zur Befestigungslasche (30, 30') gebogene Anschlusskabel (16, 16') arretieren, wobei eine erste Rastkontur als hülsenförmige Kontur (22, 22') am Anschlusskabel (16, 16') angeordnet ist, und mindestens eine zweite Rastkontur als Aussparung (36.5, 36.5') mit angeformten Rastvorsprüngen (36.6, 36.6') als Teil der Befestigungslasche (30, 30') ausgeführt ist, und wobei eine Kappe (40, 40') mit mindestens einer Aussparung (42, 42') für das Anschlusskabel (16, 16') vorgesehen ist, welche den Abwinkelbereich des Anschlusskabels (16, 16') abdeckt und auf die Befestigungslasche (30, 30') aufgeschoben und verrastet ist.

2. Sensoranordnung nach Anspruch 1, **dadurch gekennzeichnet, dass** am Sensorgehäusekörper (12) als Fixiermittel eine Sternkontur (15) angeformt ist, die mit einer korrespondierenden an der Einsteckhülse (34, 34') angeordneten Sternkontur (34.2, 34.2') zusammenwirkt.

3. Sensoranordnung nach Anspruch 2, **dadurch gekennzeichnet, dass** die Sternkontur (15) des Sensorgehäusekörpers (12) mit der korrespondierenden Sternkontur (34.2, 34.2') der Einsteckhülse (34, 34') heiß verstemmt ist.

4. Verfahren zur Herstellung einer Sensoranordnung (1, 1'), wobei ein Sensorelement (11) und ein Anschlusskabel (16, 16') zur Bildung eines Sensorgehäuses (10) durch Spritzgießen zumindest teilweise mit Kunststoff umhüllt werden, wobei das Sensorgehäuse (10) mit einer Befestigungslasche (30, 30') verbunden wird, die einen Grundkörper (32, 32') aufweist, wobei ein Sensorgehäusekörper (12) des Sensorgehäuses (10) in eine mit dem Grundkörper (32, 32') verbundene Einsteckhülse (34, 34') eingesteckt wird, wobei am Sensorgehäuse (10) und an der Einsteckhülse (34, 34') jeweils Fixiermittel (14, 15, 34.1, 34.1', 34.2, 34.2') angeordnet werden, die so ausgebildet werden, dass verschiedene Winkelstellungen zur Fixierung zwischen dem Sensorgehäuse (10) und der Befestigungslasche (30, 30') zur Verfügung gestellt werden, und wobei das Sensorgehäuse (10) und die Befestigungslasche (30, 30') in einer der verschiedenen Winkelstellungen zueinander fixiert werden **dadurch gekennzeichnet, dass** am Anschlusskabel (16, 16') und an der Befestigungslasche (30, 30') als Rastkonturen (22, 36.5, 36.5', 36.6, 36.6') ausgeführte Positionierungsmittel (20, 20', 36, 36') angespritzt werden, welche das in eine Winkelstellung zum Sensorelement (11) und/oder zur Befestigungslasche (30, 30') gebogene Anschlusskabel (16, 16') arretieren, wobei eine erste Rastkontur als hülsenförmige Kontur (22, 22') am Anschlusskabel (16, 16') angespritzt wird, und mindestens eine zweite Rastkontur als Aussparung (36.5, 36.5') mit angeformten Rastvorsprüngen (36.6, 36.6') an die Befestigungslasche (30, 30') angespritzt werden, und wobei eine Kappe (40, 40') mit mindestens einer Aussparung (42, 42.1', 42.2') für das Anschlusskabel (16, 16') auf die Befestigungslasche (30, 30') aufgeschoben und verrastet wird, welche den Abwinkelbereich des Anschlusskabels (16, 16') abdeckt.

5. Verfahren nach Anspruch 4, **dadurch gekennzeichnet, dass** die Fixiermittel (14, 15) des Sensorgehäusekörpers (12) mit den korrespondierenden Fixiermitteln (34.1, 34.1', 34.2, 34.2') der Einsteckhülse (34, 34') heiß verstemmt werden.

## Claims

1. Sensor arrangement for a vehicle, in particular for determining a rotational speed and/or a direction of rotation, having a sensor element (11), a connecting cable (16, 16') and a fastening tab (30, 30') wherein the sensor element (11) and the connecting cable (16, 16') are at least partially encased with plastic by injection molding in order to form a sensor housing (10), wherein the sensor housing (10) is connected to the fastening tab (30, 30') which comprises a base body (32, 32') with fastening means (38, 38'), wherein the fastening tab (30, 30') comprises an insertion sleeve (34, 34') which is connected to the base body (32, 32') and into which a sensor housing body (12) of the sensor housing (10) is inserted, wherein the sensor housing (10) and the insertion sleeve (34, 34') each comprise securing means (14, 15, 34.1, 34.1', 34.2, 34.2') which are embodied in such a way that various angular positions for securing the sensor housing (10) and the fastening tab (30, 30') are present, wherein the sensor housing (10) and the fastening tab (30, 30') are secured with respect to one another in one of the various angular positions, **characterized in that** positioning means (20, 20', 36, 36'), which are embodied as latching contours (22, 36.5, 36.5', 36.6, 36.6'), are arranged on the connecting cable (16, 16') and on the fastening tab (30, 30'), which positioning means (20, 20', 36, 36') lock the connecting cable (16, 16') which is bent into an angular position with respect to the sensor element (11) and/or with respect to the fastening tab (30, 30') wherein a first latching contour is arranged as a sleeve-shaped contour (22, 22') on the connecting cable (16, 16'), and at least one second latching contour is embodied as a cut-out (36.5, 36.5') with integrally formed-on latching projections (36.6, 36.6') as part of the fastening tab (30, 30') and wherein a cap (40, 40') with at least one cut-out (42, 42') for the connecting cable (16, 16') is provided, which the cap (40, 40') covers the bent region of the connecting cable (16, 16') and is fitted over the fastening tab (30, 30') and latched.

2. Sensor arrangement according to Claim 1, **characterized in that** a star contour (15) is integrally formed onto the sensor housing body (12) as a securing means, which star contour (15) interacts with a corresponding star contour (34.2, 34.2') which is arranged on the insertion sleeve (34, 34').

3. Sensor arrangement according to Claim 2, **characterized in that** the star contour (15) of the sensor housing body (12) is hot caulked with the corresponding star contour (34.2, 34.2') of the insertion sleeve (34, 34').

4. Method for producing a sensor arrangement (1, 1'), wherein a sensor element (11) and a connecting cable (16, 16') are at least partially encased with plastic by injection molding in order to form a sensor housing (10), wherein the sensor housing (10) is connected to a fastening tab (30, 30') which has a base body (32, 32'), wherein a sensor housing body (12) of the sensor housing (10) is inserted into an insertion sleeve (34, 34') which is connected to the base body (32, 32'), wherein securing means (14, 15, 34.1, 34.1', 34.2, 34.2') are respectively arranged on the sensor housing (10) and on the insertion sleeve (34, 34') and are embodied in such a way that various angular positions for securement between the sensor housing (10) and the fastening tab (30, 30') are made available, and wherein the sensor housing (10) and the fastening tab (30, 30') are secured with respect to one another in one of the various angular positions, **characterized in that** positioning means (20, 20', 36, 36'), which are embodied as latching contours (22, 36.5, 36.5', 36.6, 36.6') and which lock the connecting cable (16, 16') which is bent into an angular position with respect to the sensor element (11) and/or to the fastening tab (30, 30') are integrally injection-molded on to the connecting cable (16, 16') and onto the fastening tab (30, 30'), wherein a first latching contour is integrally injection molded onto the connecting cable (16, 16') as a sleeve-shaped contour (22, 22'), and at least one second latching contour is integrally injection molded onto the fastening tab (30, 30') as a cut-out (36.5, 36.5') with integrally molded-on latching projections (36.6, 36.6') and wherein a cap (40, 40') having at least one cut-out (42, 42.1', 42.2') for the connecting cable (16, 16') is fitted onto the fastening tab (30, 30') and latched, which cap (40, 40') covers the bent region of the connecting cable (16, 16').

5. Method according to Claim 4, **characterized in that** the securing means (14, 15) of the sensor housing body (12) are hot caulked to the corresponding securing means (34.1, 34.1', 34.2, 34.2') of the insertion sleeve (34, 34').

## Revendications

1. Système de capteur pour un véhicule, en particulier pour détecter une vitesse de rotation et/ou un sens de rotation, comprenant un élément de capteur (11), un câble de raccordement (16, 16') et une patte de fixation (30, 30'), l'élément de capteur (11) et le câble de raccordement (16, 16') étant au moins en partie enveloppés de plastique pour former un boîtier de capteur (10) par moulage par injection, le boîtier de capteur (10) étant connecté à la patte de fixation (30, 30'), laquelle comprend un corps de base (32, 32') avec des moyens de fixation (38, 38'), la patte de fixation (30, 30') comprenant une douille d'enfichage (34, 34') connectée au corps de base (32, 32'), dans laquelle douille d'enfichage est enfiché un corps de boîtier de capteur (12) du boîtier de capteur (10), le boîtier de capteur (10) et la douille d'enfichage (34, 34') comprenant chacun des moyens de fixation (14, 15, 34.1, 34.1', 34.2, 34.2'), qui sont réalisés de telle sorte que différentes positions angulaires soient possibles pour la fixation du boîtier de capteur (10) et de la patte de fixation (30, 30'), le boîtier de capteur (10) et la patte de fixation (30, 30') étant fixés l'un par rapport à l'autre dans l'une des différentes positions angulaires, **caractérisé en ce que** des moyens de positionnement (20, 20', 36, 36') réalisés en tant que contours d'encliquetage (22, 36.5, 36.5', 36.6, 36.6') sont disposés sur le câble de raccordement (16, 16') et sur la patte de fixation (30, 30'), lesquels moyens de positionnement bloquent le câble de raccordement (16, 16') cintré dans une position angulaire par rapport à l'élément de capteur (11) et/ou par rapport à la patte de fixation (30, 30'), un premier contour d'encliquetage étant disposé en tant que contour en forme de douille (22, 22') sur le câble de raccordement (16, 16'), et au moins un deuxième contour d'encliquetage étant réalisé en tant qu'évidement (36.5, 36.5') avec des saillies d'encliquetage façonnées (36.6, 36.6') en tant que partie de la patte de fixation (30, 30'), et un capuchon (40, 40') étant pourvu d'au moins un évidement (42, 42') pour le câble de raccordement (16, 16'), lequel capuchon recouvre la région coudée du câble de raccordement (16, 16') et est poussé et encliqueté sur la patte de fixation (30, 30').

2. Système de capteur selon la revendication 1, **caractérisé en ce qu'**un contour stellaire (15) est façonné en tant que moyen de fixation sur le corps de boîtier de capteur (12), lequel contour stellaire coopère avec un contour stellaire correspondant (34.2, 34.2') disposé sur la douille d'enfichage (34, 34').

3. Système de capteur selon la revendication 2, **caractérisé en ce que** le contour stellaire (15) du corps de boîtier de capteur (12) est maté à chaud avec le contour stellaire correspondant (34.2, 34.2') de la douille d'enfichage (34, 34').

4. Procédé pour fabriquer un système de capteur (1, 1'), dans lequel un élément de capteur (11) et un câble de raccordement (16, 16') sont enveloppés au moins en partie de plastique pour former un boîtier de capteur (10) par moulage par injection, le boîtier de capteur (10) étant connecté à une patte de fixation (30, 30'), laquelle présente un corps de base (32, 32'), un corps de boîtier de capteur (12) du boîtier de capteur (10) étant enfiché dans une douille d'enfichage (34, 34') connectée au corps de base (32, 32'), des moyens de fixation (14, 15, 34.1, 34.1', 34.2, 34.2') étant à chaque fois disposés sur le boîtier de capteur (10) et sur la douille d'enfichage (34, 34'), lesquels moyens de fixation sont réalisés de telle sorte que l'on dispose de différentes positions angulaires pour la fixation entre le boîtier de capteur (10) et la patte de fixation (30, 30'), et le boîtier de capteur (10) et la patte de fixation (30, 30') étant fixés l'un par rapport à l'autre dans l'une des différentes positions angulaires, **caractérisé en ce que** des moyens de positionnement (20, 20', 36, 36') réalisés en tant que contours d'encliquetage (22, 36.5, 36.5', 36.6, 36.6') sont surmoulés sur le câble de raccordement (16, 16') et sur la patte de fixation (30, 30'), lesquels moyens de positionnement bloquent le câble de raccordement (16, 16') cintré dans une position angulaire par rapport à l'élément de capteur (11) et/ou par rapport à la patte de fixation (30, 30'), un premier contour d'encliquetage en tant que contour en forme de douille (22, 22') étant surmoulé sur le câble de raccordement (16, 16') et au moins un deuxième contour d'encliquetage étant surmoulé en tant qu'évidement (36.5, 36.5') avec des saillies d'encliquetage façonnées (36.6, 36.6') sur la patte de fixation (30, 30'), et un capuchon (40, 40') avec au moins un évidement (42, 42.1', 42.2') pour le câble de raccordement (16, 16') étant poussé et encliqueté sur la patte de fixation (30, 30'), lequel capuchon recouvre la région coudée du câble de raccordement (16, 16').

5. Procédé selon la revendication 4, **caractérisé en ce que** les moyens de fixation (14, 15) du corps de boîtier de capteur (12) sont matés à chaud avec les moyens de fixation correspondants (34.1, 34.1', 34.2, 34.2') de la douille d'enfichage (34, 34').
